# EUROPEAN PATENT APPLICATION

(11) **EP 1 635 285 A1**
(43) Date of publication of application: **15.03.2006**
(21) Application number: 05013554.0
(22) Date of filing: 23.06.2005
(51) Int. Cl.: G06Q 10/00

(54) **Method for rating an advertisement**

(30) Priority: 08.09.2004 US 935116
(71) Applicant: HURRA Communications GmbH, 70599 Stuttgart (DE)
(72) Inventor: Schweier, René, 70599 Stuttgart (DE)
(74) Representative: Wörz, Volker Alfred

(57) **Abstract**

To optimise an advertisement, that is displayed to a purchaser, e.g. by broadcasting the advertisement via radio or television, or by publishing the advertisement in a printed journal, the advertisement includes an address (e.g. a telephone number or an URL) identifying a server system. The purchaser instructs a client system to request a code from the server system, e.g. by sending an SMS to the server system. The server system generates a code that identifies the advertisement and causes the code to be transmitted to the client system. The purchaser purchases a product that is related to the advertisement and provides the code to the shop at which the product was purchased.

The shop then causes the code to be transmitted to the server system. The server system identifies the advertisement and performs a rating of the advertisement using information related to the purchase of the product. The rating can comprise information according to the number of sales that can be assigned to the advertisement, the total sales revenue, or the average advertising costs per product. According to a preferred embodiment of the invention, an optimisation of the advertisement is performed by changing at least one parameter related to the advertisement.

## Description

### BACKGROUND OF THE INVENTION

The present invention relates to a method for rating an advertisement and to a server system for facilitating the rating of the advertisement.

Advertising a product, a producer or an distributor of products can be performed by placing an advertisement in a newspaper or a journal. Advertising can also be performed by broadcasting a commercial via television (TV) or radio.

Typically, advertisements are performed to increase the profit by increasing the number of sales. Frequently, different advertising campaigns are performed in parallel, e.g. TV spots or commercials sent via TV at different times, several advertisements published in different journals, and several advertisements broadcasted via radio. However, publishing the advertisement in a journal or broadcasting the advertisement via TV produces costs. To be profitable and in particular to increase the sales revenue, advertisements have to be rated.

While it is possible to determine the cost of a specific advertising campaign i.e. a specific advertisement, it is difficult to determine whether the purchase of a product is caused by the specific advertisement. It is even difficult to determine, whether an increase or decrease of the number of sales of a product is really induced by the totality of the advertising campaigns. In particular, it is difficult to determine, how a modification of a specific advertising campaign influences the number of total sales. This makes it very hard to decide, whether and how a specific advertisement should be optimised to increase the number of sales and in particular to improve the sales revenue.

To optimise the advertisements related to a product or a service it is known to cancel or replace one or more advertisements or to place new advertisements according to some kind of trial-and-error procedure.

To gain information about whether a product was purchased as a consequence of an advertisement, it is known to ask the purchaser about which advertisement caused him to purchase the product. Since this kind of questioning usually is voluntarily, only few purchasers answer these questions. In addition, purchasers often can not remember, which advertisement caused them to purchase the product, eventually because of the delay between taking notice of an advertisement and purchasing the advertised product. Further on, even if the purchaser answers this question, it can not be verified whether it is the truth or not.

### SUMMARY OF THE INVENTION

It is an object of the present invention to provide an improved method for rating an advertisement. In particular, it is an object of the invention to provide an improved method to determine, whether an advertisement was causal for the purchase of a product.

This object is solved by the method of claim 1. As well, the object is solved by the server system of claim 26.

According to the present invention, an advertisement is presented to a purchaser. This can be done by broadcasting the advertisement via radio or television, preferably on a digital TV (DVB-C: Digital Video Broadcasting via Cable, DVB-S: DVB via Satellite, DVB-T: DVB via Terrestrial/Arial). It can also be done by publishing the advertisement in a printed journal, e.g. a newspaper or a magazine, or by showing a commercial in a cinema. Further, presenting the advertisement to the purchaser can be done via an Internet-TV. The advertisement contains an address which can be identified by a server system. The address can be for example a telephone number referring to the fixed network or to a mobile telecommunication network. It is also possible, that the address represents a so called URL (uniform resource locator) according to the Internet.

The purchaser instructs a client system to issue the address. The client system can be for example a mobile telephone, a personal computer, or any device that enables the purchaser to communicate directly or indirectly (e.g. via another device) with the server system. If the client system is a mobile telephone, the address can be issued by sending a message, e.g. using SMS (short message service), to the server system. The message includes an address that identifies the client system. The server system then generates a code that identifies the advertisement and causes the code to be transmitted to the client system, e.g. using SMS or via email. Further, the client system could be a digital TV set, or more precisely, a set-to-box used for receiving digital TV. The set-top-box could communicate with the server system via a return channel established via a cable, a satellite or a telephone depending on the kind of digital TV (DVBC, DVBS, DVBT). Finally, the client system could be an Internet-TV, or more precisely, a computer adapted for communicating with an Internet-server providing Internet-TV signals, the computer being used for receiving from the server and presenting Internet-TV signals to the purchaser via a computer monitor.

When the purchaser buys a product that is related to the advertisement, the code is provided to the shop where the product is being purchased. Transmitting the code to the shop can be effected via a telephone link, via a return channel of a digital TV or via the Internet. The code identifying the advertisement is then transmitted to the server system.

The server system identifies the advertisement and performs a rating of the advertisement. Therefore, the server system uses information related to the purchase of the product, e.g. the price of sale or the profit, which are provided e.g. by the shop or a merchandise information system that is assigned to the shop. The rating can comprise information according to the number of sales that can be assigned to the advertisement, the total sales revenue, or the average advertising cost per product.

Preferably, an optimisation of the advertisement is performed by changing at least one parameter related to the advertisement. According to preferred embodiments of the invention, the parameter defines a time (e.g. the time and/or the date of broadcasting the advertisement or the duration of the broadcasted advertisement), a position within other advertisements, a channel, a specific program, a topic, a journal, the page of a journal, the position within a page, a graphical feature, or weather characteristics like the temperature or whether it is rainy, sunny, or cloudy, etc. Further, the parameter defines a certain user group of potential purchasers, which are particularly susceptible for the advertisement or its content and its particular design. Whether a certain user group is particularly susceptible for the advertisement or not is determined in the course of or as a result of rating the advertisement.

Preferably, the parameter defines a group of potential purchasers, which in the past have already bought the advertised product or a similar product or which might have an interest above average in the advertised product, the higher interest being determined from the products bought by the group members so far. By doing so, the presentation of advertisement to potential purchasers can be optimised according to the previous response. For example, this would allow a direct addressing of viewers via a non-ambiguous identification (ID) of the DVB-receiver. Apart from its ID, each DVB-receiver could store information concerning the viewers bank details, his delivery address, etc.

Further, it is possible to transmit an electronic message to the viewer of a TV programme or of a TV commercial or rather to a mobile terminal (e.g. a mobile phone or a pager) associated with the viewer. This could be realized by providing an additional functionality to the DVB-receiver permitting transmission of the message to the mobile terminal via any kind of wireless local area network (WLAN) technology, for example according to a BlueTooth standard. The message would comprise an advertisement for a certain product, a manufacturer or a vendor of a product.

Further embodiments of the invention are provided in the dependent claims. In particular, it is emphasized that the invention may also be realized by a computer program or a computer program product which are able to execute the method of claim 1 when run on a data processing system.

Preferably, the advertisement is published via a broadcast. At least one advertisement related parameter can define a broadcast channel. At least one advertisement related parameter can define a program.

Alternatively, the advertisement is published in a journal. At least one advertisement related parameter can define a journal. At least one advertisement related parameter can define a page within the journal.

Preferably, at least one advertisement related parameter defines a topic. At least one advertisement related parameter can define a position within a set of advertisements. At least one advertisement related parameter can define a graphical feature of the advertisement. At least one advertisement related parameter can define a weather related characteristic.

Preferably, at least one information related to the purchase of the product is the price of sale of the product. At least one information related to the purchase of the product can be the profit achieved by the purchase.

Preferably, the client system is a mobile telecommunication system. The client system can be a set-top-box or any other appropriate device adapted for receiving digital television signals and used for presenting the signals to a potential purchaser by means of a display. The client system can be a computer connected to the Internet and adapted for receiving Internet television data and used for presenting the data to a potential purchaser by means of a display.

Preferably, the purchaser is allowed a discount when purchasing the product and providing the code. The server system can generate the code depending on date and/or time of the client system's request.

Preferably, the server system provides the actual rating and at least one parameter related to the advertisement to an authorized user. The rating of the advertisement can be performed depending on advertising costs. The address related to the server system can be a telephone number. The address related to the server system can be a uniform resource locator (URL). The purchase can be induced using the client system.

### BRIEF DESCRIPTION OF THE DRAWINGS

- Fig. 1: is a schematic block diagram of main components of a first embodiment of the invention;
- Fig. 2: is a schematic block diagram that shows the main components of a second embodiment of the invention.
- Fig. 3: Fig. 3 is a flow diagram of an embodiment of the present invention.

### DESCRIPTION OF THE PREFERRED EMBODIMENTS

The invention together with further objects, advantages, features and aspects thereof will be more clearly understood from the following description when taken in connection with the accompanying drawings.

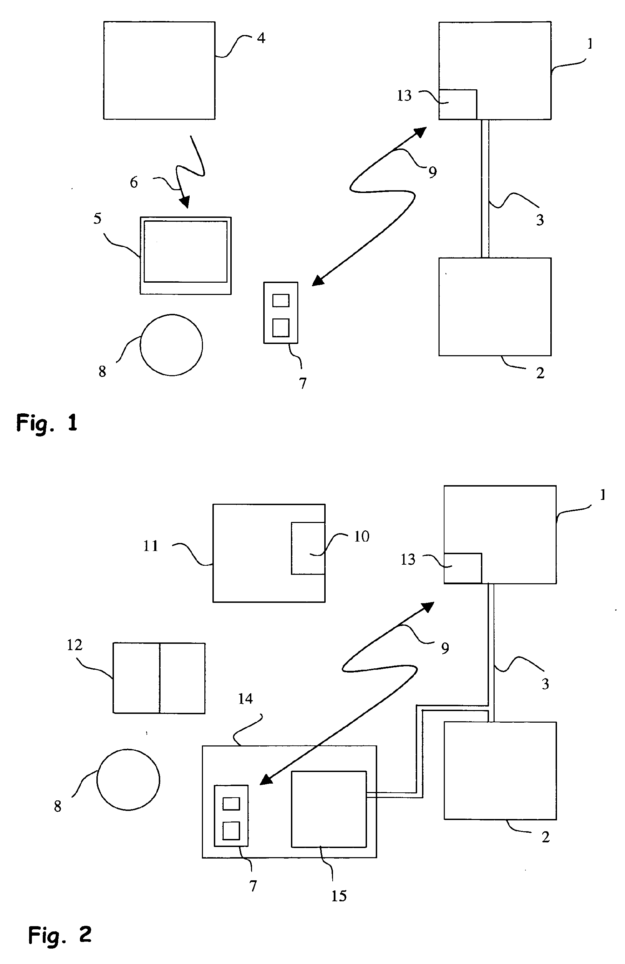

Figure 1 shows a first embodiment of a system for optimising an advertisement. The system comprises a server system 1 and a shop 2. The shop 2 can be an online-shop. The shop 2 can also be represented by a conventional retail shop. The shop 2 and the server system 1 are connected via a communication network e.g. the Internet 3. A broadcasting service 4 provides means for broadcasting a program to a receiver, e.g. a television set 5, via a transmission path, e.g. a radio link 6. Of course, alternatively, the receiver could be a set-top-box of a digital television network (e. g. DVB-C, DVB-S, DVB-T) or a computer being used as an Internet television receiver.

The system further comprises a client system, e.g. a mobile phone 7, that is assigned to a potential purchaser 8. The mobile phone 7 and the server system 1 are enabled to exchange data via a communication network, e.g. a mobile network 9. Of course, the client system could be any kind of input device (e. g. a radio control) interoperating with a set-top-box of a digital television network, too. In that case the data exchange between client system and server system would be performed via a return path (channel) of the digital television network. Further, the client system could be any kind of input device (e. g. a keyboard) interoperating with a computer making part of an Internet television network. In that case the data exchange between client system and server system would be performed via the Internet.

In a modified embodiment of the system shown in figure 1, the broadcasting service 4 provides means for broadcasting audio radio via an adapted radio link 6. In this embodiment, the television set 5 would be replaced or completed by a radio set.

An address 13 is assigned to the server system 1 so that the mobile phone 7 can establish a data link between the mobile phone 7 and the server system 1, e. g. by using the mobile network 9. In general, address 13 can be a telephone number according to the fixed network or to a mobile telecommunication network. It is also possible, that address 13 represents a so called URL (uniform resource locator) that allows to identify server system 1 and/or information provided by the server system wherein the server system 1 is connected to the Internet 3. It is possible, that the client system, e.g. the mobile phone 7, is also connectable to the Internet 3.

Figure 2 shows a second embodiment of a system for optimising an advertisement. The system also comprises server system 1, shop 2, and mobile phone 7 or any other kind of client system assigned to the purchaser 8. Instead of the broadcasting service 4, the system shown in figure 2 comprises an advertising office 10 that is assigned to a publishing house 11. The publishing house 11 publishes a journal 12, which can be bought and read by the potential purchaser 8. The publishing house 11 could also publish advertising road signs which are installed in strategically important and highly frequented places.

In the embodiment illustrated in figure 2 the mobile phone 7 is part of a client system 14. The client system 14 also comprises a computer system which can be realized by a personal computer 15. According to a preferred embodiment of the invention, the personal computer 15 is connectable to the Internet 3.

According to another embodiment of the present invention, the journal is published such that it can be viewed using a so called electronic paper technology, e.g. an eBook. It is conceivable, that the publishing house 11 publishes the journal via an appropriate memory device, e.g. a CD-ROM. It is also conceivable, that the journal is published by transmission of its data via the Internet 3 to an electronic device that can display the journal. It is also conceivable, that the journal is a so called online-magazine. This means, that the journal is published via one or more web pages that can be accessed via the Internet 3 from the client system 14, e.g. the personal computer 15 or the mobile phone 7. It is also conceivable, that the journal is published via the Internet 3 in another conventional file format, e.g. as a pdf-file, a ps-file, or a jpg-file. Further, the journal could be published via the Internet 3 in any data format used for Internet television or via a digital television network in any data format used for digital television transmissions.

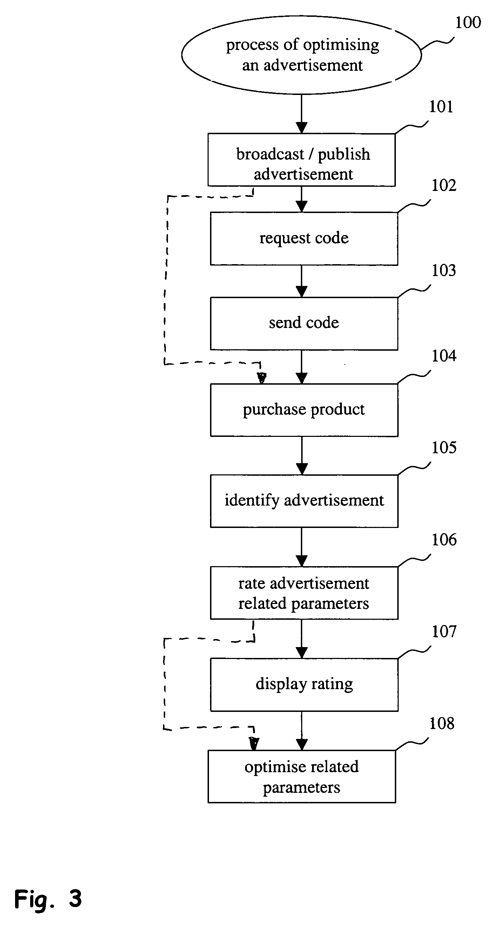

Figure 3 shows a flow diagram of an embodiment of the process 100 of optimising an advertisement according to the present invention. Figure 2 also illustrates the mode of operation of the embodiments of the present invention as shown in figure 1 and figure 2.

In a step 101 the potential purchaser 8 takes notice of an advertisement. This might occur by watching TV and receiving the advertisement using the television set 5, wherein the advertisement is broadcasted (e.g. as a commercial) from the broadcasting service 4 using the radio link 6. If the advertisement is published by the publishing house 11 in the journal 12, the purchaser 8 takes notice of the advertisement when buying and reading the journal 12.

The advertisement comprises information concerning a product that can be purchased or a service that can be ordered. The advertisement can also comprise information concerning a producer or a general distributor with or without explicitly referring to one or more products. Together with the advertisement, address 13 is displayed. According to a preferred embodiment of the invention, the advertisement contains further information indicating that the purchaser 8 is allowed a discount when purchasing the advertised product or purchasing any product from an advertised producer or distributor. The discount can be realized by a reduction of the price of sale. The discount can also be realized by a free gift, a credit or any other bonus that can be used as an incentive to buy.

In a step 102 the purchaser 8 requests a code from the server system 1 by sending a message to the server system 1 via the communication network, e. g. the mobile network 9, the return channel of a digital television network or the Internet. This can be done by sending a possibly empty SMS (short message service) to the telephone number that is shown on the advertisement as address 13. It can also be done by calling a call centre that is assigned to the server system 1. Further, this step can be performed by transmitting an appropriate message or command to the server system 1 via the return channel of a digital television network or the Internet (e. g. by sending an email to the server system 1).

The server system 1 then generates a code that is assigned to the advertisement and thus can be used to identify the advertisement. In a preferred embodiment of the present invention, the code is assigned to a single advertising campaign, e.g. the broadcasting of an advertisement at a specified place, date and time, via a specified channel, according to specific weather conditions, etc. Alternatively, the code is assigned to a predefined set of advertisements so that it identifies not a single advertisement but all advertisements out of a predefined group of advertisements. The group of advertisements can, for example, comprise all advertisements related to a specific product or some advertisements that are broadcasted via a specific TV-channel within in a predefined period of time.

The code generation can be performed in various ways known to one skilled in the art. It may be helpful to assign a unique identifier for each advertisement or for each set of advertisements, in order to allow a more detailed rating of each of the advertisements. Having such a kind of predefined advertisement identifier, the code can be realized as a numerical or an alpha-numerical string that consists of the predefined advertisement identifier. Possibly, the code comprises further information, e.g. the time of the request, the actual value of a counter that counts each request according to the actual advertisement, the telephone number of mobile phone 7 or the like.

According to a preferred embodiment of the present invention, the server system 1 identifies the advertisement depending on the time the purchaser 8 requests the code. Therefore, it is conceivable that the purchaser 8 has to request the code from the server system 1 within a predefined period of time (e.g. 10 minutes) after the purchaser 8 has watched the advertisement on TV. If there are different advertisements that are to be optimised by the server system 1 or if the advertisement is broadcasted via different channels at nearly the same time, an identification of the appropriate advertisement can be ensured by using for each different advertisement, channel, program, etc., a different address 13, wherein all these addresses 13 are assigned to the server system 1. Thus, if the purchaser 8 requests a code, the server system 1 can identify the advertisement by evaluating the address 13 (e.g. the telephone number) the purchaser 8 has used to send the request to the server system 1.

Alternatively, address 13 can be assigned to a set of advertisements, e.g. the advertisements that are broadcasted within a predefined period of time and not depending on the TV-channel that broadcasted the advertisement.

In another embodiment of the present invention, the server system 1 generates the code at random, e.g. by using a random number generator. The server system 1 assigns the code to the advertisement. To identify the appropriate advertisement, the server system 1 evaluates the time of the request and/or the address that was issued by the purchaser 8 using the mobile phone 7. Preferably, the server system 1 generates the code by just selecting a predefined string that has already been assigned to the advertisement and has been stored in database.

According to another embodiment, the server system 1 realizes the generated code as a so called bar code. The bar code can be represented as a picture according to a known graphic and/or compression format, e.g. jpeg, pdf, gif, and the like on the display of a telephone or on a computer monitor.

Preferably, the server system 1 stores the generated code in a database that allows the server system 1 to identify an advertisement according to a given code and to retrieve one or more codes that identify a given advertisement.

In a step 103 the server system 1 sends the code to the client system, e.g. the mobile phone 7 or the personal computer 15 that is assigned to the purchaser 8. This is preferably done by SMS via a telecommunication network, by email via the Internet or by means of appropriate data transmitted to the client system via a digital television network or via the Internet as part of Internet television data. The client system 14, e.g. the mobile phone 7 or the personal computer 15, receives the code and stores it. If the code is represented as a bar code, it is also conceivable that the purchaser 8 causes the code to be printed on paper.

Finally, it is possible that the advertisement already contains the desired code so steps 102 and 103 can be omitted. This embodiment is particularly interesting for advertisements created and/or presented to the purchaser 8 online. However, if the code is assigned to a group of advertisements, this embodiment could be interesting for advertisements printed in journals, too. The code contained in the advertisement could comprise numbers and/or letter or any kind of code (e. g. barcode).

In a step 104 the purchaser 8 purchases a product at a shop 2, wherein the product can be the product advertised via the advertisement or at least a product that is distributed by the advertised distributor or that is produced by the advertised producer.

According to a preferred embodiment of the invention, the shop 2 is a retail shop. The purchaser 8 goes into the retail shop and passes the code to the shop assistant at the latest when paying. This can be done by telling the cashier the code or by typing the code into a key pad that is provided at the cashier. If the code is stored on the mobile phone 7, the purchaser 8 can instruct the mobile phone 7 to display the code on its display. If the code is a bar code or any other kind of scanable code, it is conceivable that the cashier scans it with an appropriate scanning device (comprising means for interpreting the code and possibly OCR-means). The bar code can be scanned directly from the display of the mobile phone 7 or from a printed medium. If the code is provided directly on the advertisement, it is conceivable that the code is scanned directly from the advertisement, if the purchaser 8 brought along the journal 12.

Alternatively, the code can be passed to the shop 2 using a data connection which connects the mobile phone 7 and a computer system installed in the shop 2. The data connection can be realized by a infrared (IR) interface or any kind of radio connection, e. g. by a BlueTooth connection. It is also conceivable, that the purchaser 8 instructs the mobile phone 7 to send the code via SMS to a server of the shop 2.

If the code allows the purchaser 8 a discount, the price of sale will be reduced accordingly. If the code allows the purchaser 8 some credit points those points can be stored in an appropriate conventional manner.

According to another preferred embodiment of the present invention, the shop 2 is an online-shop. An online-shop basically is a computer system that is connected to a computer network, e.g. the Internet 3. For purchasing a product or ordering a service a purchase order is sent from the client system 14 e.g. the personal computer 15 or the mobile phone 7 to the online-shop via the Internet 3 or a telecommunication network. A computer software, e.g. a browser, is installed on the client system 14. The browser enables the client system 14, i.e. personal computer 15 or mobile phone 7, to send information to the online-shop and to display information received from the online-shop. The information sent from the online-shop to the client is frequently coded in HTML (Hypertext Markup Language) and transmitted as a so-called Web page.

To contact the online-shop, the purchaser 8 types a unique address into the browser, wherein the unique address is assigned to the shop. Within the Internet 3 the unique address is called an URL (Uniform Resource Locator).

Depending on a request of the purchaser 8, the online-shop sends a Web page to the purchaser 8, i.e. to the client system 14, e.g. the mobile phone 7 or the personal computer 15, which enables the purchaser 8 to select and order a product or a service. When purchasing the product, the purchaser 8 instructs the client system 14 to transmit the code to the online-shop. If the code allows the purchaser 8 a discount, the price of sale will be reduced accordingly.

In a step 105, shop 2 causes the code to be sent to the server system 1. This can be done via the Internet 3 by means of a server associated with the shop 2 and connected to the Internet 3. Typically, the shop 2 also sends further information that are related to the purchase. These further information can comprise the price of sale, place, date and time when the purchase was accomplished and/or the margin.

The server system 1 receives the code together with the further information related to the purchase and identifies the advertisement. This can be done by sending a query to the database in which the code has been stored in step 102. It is also conceivable, that the code itself is coded in a way that allows to identify the advertisement directly, i.e. without sending a query to the database. Possibly, the code therefore contains an ID that is assigned to the advertisement. Various algorithms for generating and storing such codes and various methods for coding and encoding an ID are known to one skilled in the art.

According to a further embodiment of the present invention, the purchaser 8 does not purchase a product but requests information related to the product or to the producer, the distributor of an advertised product. This information can be requested from an information provider connected to the Internet. The information can also be requested via a call centre that is assigned to the producer, the distributor, or a shop that offers the product for sale. The information can be e.g. a sales brochure. If the purchaser 8 requests the sales brochure from the information provider, the purchaser 8 is allowed a discount, e.g. by giving away an advertising gift (incentive).

In a step 106, server system 1 performs a rating of the advertisement based on the code and the further information that were sent from the shop 2 to the server system 1 in step 105. According to a preferred embodiment of the present invention, the rating comprises at least the determination of one or more of the following values:
- advertising costs;
- profit when selling advertisement related products;
- sales volume;
- min/max/average time between broadcasting/publishing the advertisement and the purchase of a advertisement related product;
- ratio of code requests and purchases;
These values are meaningful to determine, whether an advertisement is successful or not.

In a step 107, the server system 1 makes the rating accessible to at least one authorized user, e.g. the shop 2, the producer of a product, the distributor of a product, and/or an advertising agency. Therefore, the server system 1 provides for each authorized user one or more accounts. The authorized user or at least a client system that is assigned to the authorized user logs into the account by passing a user identification and a password and inquires the results of the rating. The server system 1 transmits the results of the rating to the authorized user. This can be done by transmitting a possibly dynamically generated web page. Alternatively, it is conceivable that the server system 1 sends an email to the authorized user that contains the results of the rating. Of course, it is possible to omit step 107, if desired.

In a step 108 an optimisation is performed. The optimisation can comprise different parameters related to the advertisement. These parameters can define place, date and/or time of publication or broadcast of the advertisement, a topic, a graphical feature, etc. A graphical feature can describe the fonts of the text, the colour of the text, whether pictures are included, which pictures are included, the scale of several graphic elements, and the like. The optimisation can also comprise parameters that are related to one or more weather characteristics or conditions. These parameters can describe the outside temperature, and/or whether it is rainy, cloudy or sunny. An optimisation that takes weather related parameters into account can yield for example in broadcasting an advertisement only when it is likely to be rainy or at low temperatures.

If the advertisement is broadcasted via TV, radio or the Internet, the parameters can also define a channel, a program, the length of the broadcast or the position between other advertisements. If the advertisement is published in a journal, the parameters can define the journal, the page within the journal, the position on a page, the topics of surrounding articles and the like.

Preferably, the optimisation yields in increasing the profit when selling one ore more products that are related to the advertisement. This can usually be achieved by increasing the number of products that are sold as a result of the advertisement. Since the advertising cost decrease the sales revenue of each product, it can be a further goal of the optimisation to only increase advertisement cost if the resulting sales revenue increases which means that the increased advertising cost are not higher than the increased profit.

Another parameter that can be considered when optimising the advertisement is the chance of the advertisement to be noticed by potential purchasers. This parameter depends on other parameters, e.g. the time when an advertisement is broadcasted, the channel it is broadcasted on, and the position within other advertisements that are sent, e.g. during the break or pause of a movie. Basically, the more people take notice of the advertisement, the more people will purchase a related product, assuming that a fixed rate of people that take notice of the advertisement purchase a related product. So, another parameter that can be optimised is the rate of people that purchase a product related to the advertisement when they have taken notice of the advertisement. For instance, advertising a product related to gardening is most likely more effective, if the advertisement is published in a gardening-journal than if it is broadcasted via TV in the break or pause of the simulcast of a motoring event. Such a gardening related broadcast can also be more effective to be broadcasted, when it is warm but rainy outside. This goes along with the observation, that at low temperatures, e.g. in winter, a purchaser is less likely in favour of purchasing gardening products. On the other hand, if it is warm outside, e.g. in summer, fewer people watch TV, and therefore they cannot take notice of the advertisement. But if it is summer and rainy outside, people are in favour of buying gardening products and are more likely to watch TV because it is raining outside. Thus, advertising gardening related products on a rainy summer day might be most effective. Therefore, for placing an advertisement it can be useful to take the weather forecast into account.

The optimisation is performed automatically, preferably in the server system 1. This can increase the gain of the optimisation procedure, since more data can be taken into account for optimising the advertisement allowing a more sophisticated optimisation and the optimisation procedure can be performed faster.

To perform an automated optimisation, it is conceivable to develop an expert system that supports the optimisation process. For example, the expert system can hold for different combinations of parameters the likelihood of increasing the profit of a given product. Thus, if a product is given and maybe one ore more fixed parameters (e.g. the type of the product, the industrial sector, the maximum advertisement costs, etc.), the expert system will suggest values for the remaining parameters (e.g. broadcasting via TV or publishing in a journal, TV-program, broadcasting time, channel, page of journal, position within other advertisement, etc.).

Preferably, the expert system is also able to suggest mixed strategies, e.g. to define for one product that has to be advertised more than one advertising campaigns, wherein the advertising campaigns can be performed in parallel. This means for instance, that an advertisement is broadcasted via different channels in different programs, attached to different movies that are shown in one or more movie cinemas, and published in one or more print media. For each advertising campaign the expert system can provide the corresponding set of parameters.

Further, it is possible to forward an electronic message to all spectators in a cinema or in a theatre, or rather to appropriate electronic devices associated with the spectators. The message could comprise an advertisement associated with a certain product, with a manufacturer or with a dealer, etc. One could think of transmitting the message to the spectators contemporarily with an advertisement shown on the screen or with a certain action in the film or the play. The message comprises a link to a shop or vendor which sells the product. For example, contemporarily to an advertisement for a certain product shown on the screen of a cinema, an SMS-message could be sent to all mobile terminals (e.g. mobile phones, pagers, etc.) within the cinema using any kind of wireless local area network (WLAN) technology, for example via BlueTooth. The SMS-message could comprise an advertisement for the product and a link to a shop or an address of a shop, where the product can be purchased. Similarly, contemporarily to an actor in a film or in a play picking up, using or purchasing a certain product, a SMS-message could be sent to all Mobile terminals in the cinema or in the theatre. Among the spectators the number of potential purchasers actually interested in the product is surely above average.

The expert system can be implemented as an automatic rule based expert system, i.e. by providing predefined rules in a knowledge base. Preferably, the expert system is designed to be self-learning and/or self-adapting. This can be realized by storing for each advertisement the set of parameters in the knowledge base accompanied by the results of the rating. Whenever new ratings are available, the knowledge base will be updated. To perform the optimisation the expert system uses the knowledge stored in the knowledge base, i.e. the predefined rules together with parameters of advertisements that have already been rated and/or optimised. The implementation of automatic optimisation, e.g. the expert system, can be realised through a software using various different tools and/or libraries that are known to one skilled in the art.

The structure of the server system 1, the structure of the optimisation process as described in figure 3, and the functionality of the expert system is just one example to illustrate the invention by describing embodiments of the invention. It is known to one skilled in the art to realize the server system 1, the shop 2, the broadcasting service and the client system 14 in various different ways. It is for example conceivable that the server system 1 and the shop 2 are realized on the same computer system or that the server system 1 and/or the shop 2 are distributed among various different computer systems.

According to a preferred embodiment of the present invention, the code being generated in step 102 to be unique. It is conceivable, that a purchaser 8 requests the code and distributes the code to different further purchasers. If each code is unique and only sent once from the server system 1 to a purchaser 8, it enables the server system 1 to determine, whether a code is used more than once when purchasing a product. Passing each code only once from the server system 1 can thus cause a refinement of the rating of an advertisement, e.g. by illustrating, how many purchases of a product are caused by different purchasers 8. The server system 1 can also ensure, that for each code passed from the server system 1 a discount is given only once.

According to another preferred embodiment of the present invention, an identification (UID) of the purchaser 8 and/or the client system, e.g. the mobile phone 7, is sent to the server system 1 in the step 102 when the code is requested from the server system 1. The UID can be for example the telephone number that is assigned to the mobile phone 7 which can be sent automatically to the server system 1 when requesting the code. The code generation can then be performed so that the UID and the identification of one or more advertisements can be deduced from the generated code. Therefore, it is conceivable to input the UID and/or the advertisement identification to the code generating algorithm. It is also conceivable, that the server system 1 generates a code that does neither incorporate the UID nor the advertisement identification. Instead, the code is stored in a data base assigned to the server system 1 such that the code can be associated with the UID and the advertisement identification. This enables the server system 1 to perform an even more precise rating of the advertisement, e.g. by illustrating how many different users have purchased a product according to taking notice of a specific advertisement or an advertisement out of a predefined set of advertisements. It also enables the server to organise different incentive programs, e.g. by allowing additional discounts to purchasers 8 that purchase a great deal of products.

According to a further preferred embodiment of the present invention, the receiver, e.g. television set 5, and the client system 14, e.g. the mobile phone 7, are connectable to a communication network, e.g. an ad-hoc network based on a BlueTooth data connection. The broadcasting service 4 attaches a messages to the advertisement that is received from the receiver and transmitted to the client system via the ad-hoc network. The message can be displayed on the client system 14 and asks the purchaser 8 to request the code from the server system 1. The request can be performed by simply pressing a defined button. It is also conceivable, that the code is transmitted from the server system 1 to the broadcasting service 4. The broadcasting service 4 attaches the code to the information that represents the advertisement and transmits it to the receiver, e.g. the television set 5. Again, the receiver and the client system 14 are connectable by a communication network. The receiver or the client system 14 displays a message that asks the purchaser 8 to request the code, possibly by just pressing a button. The code is then transmitted from the receiver to the client system 14.

## Claims

1. Method for rating an advertisement, the method comprising the steps of:
a) presenting the advertisement and an address related to a server system (1) to a purchaser (8);
b) addressing the server system (1) using the address and requesting a code from the server system (1) using a client system (7; 15) instructed by the purchaser (8);
c) automatically transmitting an automatically generated code from the server system (1) to the client system (7; 15), wherein the code identifies the advertisement;
d) purchasing a product related to the advertisement at a shop (2) and providing the code to the shop (2);
e) transmitting the code to the server system (1); and
f) rating the advertisement using the server system (1) using information related to the purchase of the product.

2. The method of claim 1, wherein an optimisation of the advertisement is performed by changing at least one parameter related to the advertisement.

3. The method of claim 1, wherein the code is provided to the shop (2) using the client system (7; 15).

4. The method of claims 1 to 3, wherein the advertisement is published via a television (5) or radio broadcast.

5. The method of claims 1 to 3, wherein the advertisement is published via a digital television or Internet television broadcast.

6. The method of claims 1 to 3, wherein the advertisement is published in a journal (12).

7. The method of claims 1 to 6, wherein at least one advertisement related parameter defines a place, date and/or time of publication of the advertisement.

8. The method of claims 1 to 7, wherein the rating is performed using information from a merchandise information system that is associated with the shop (2).

9. The method of claims 1 to 8, wherein the code is provided to the shop (2) as a bar code.

10. The method of claims 1 to 9, wherein the optimisation is performed automatically using the server system (1).

11. The method of claim 10, wherein the automatic optimisation is performed using an expert system.

12. A server system (1) for facilitating optimisation of an advertisement, the server system (1) comprising:
- means for generating and transmitting a code to a requesting client system (7; 15), wherein the code identifies an advertisement;
- means for receiving the code from a shop (2);
- means for identifying the advertisement according to the received code;
- means for receiving information related to a purchase of a product related to the advertisement, wherein the information is issued from the shop (2); and
- means for rating the advertisement using the received information related to the purchase of the product.

13. The server system (1) of claim 12, wherein the server system (1) comprises means for carrying out the method according on any of the claims 1 to 11.
